(19) Europäisches Patentamt
European Patent Office
Office européen des brevets

(11) EP 3 950 379 A1

(12) EUROPEAN PATENT APPLICATION
published in accordance with Art. 153(4) EPC

(43) Date of publication:
**09.02.2022 Bulletin 2022/06**

(21) Application number: **20778835.7**

(22) Date of filing: **27.03.2020**

(51) International Patent Classification (IPC):
***B60C 1/00*** *(2006.01)* ***C08L 9/00*** *(2006.01)*
***C08L 15/00*** *(2006.01)* ***C08L 21/00*** *(2006.01)*
***C08L 101/02*** *(2006.01)*

(52) Cooperative Patent Classification (CPC):
**B60C 1/00; C08L 9/00; C08L 15/00; C08L 21/00; C08L 101/02**

(86) International application number:
**PCT/JP2020/014324**

(87) International publication number:
**WO 2020/196892 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.03.2019 JP 2019062525**

(71) Applicants:
- **ZS Elastomers Co., Ltd.**
  **Tokyo 100-0005 (JP)**
- **SUMITOMO CHEMICAL COMPANY LIMITED**
  **Chuo-ku**
  **Tokyo 104-8260 (JP)**

(72) Inventors:
- **SUGINO, Yoshitaka**
  **Kawasaki-shi, Kanagawa 210-9507 (JP)**
- **HAMA, Hisakatsu**
  **Sodegaura-shi, Chiba 299-0295 (JP)**
- **KANESAKA, Sho**
  **Ichihara-shi, Chiba 299-0195 (JP)**

(74) Representative: **Hansen, Norbert**
**Maiwald Patentanwalts- und Rechtsanwaltsgesellschaft mbH**
**Elisenhof**
**Elisenstraße 3**
**80335 München (DE)**

# (54) RUBBER COMPOSITION AND METHOD FOR PRODUCING RUBBER COMPOSITION

(57) A rubber composition contains a rubber component, an additive, and a filler, wherein the additive comprises a compound including carbon atoms and at least one atomic species selected from the group consisting of silicon atoms, nitrogen atoms and oxygen atoms; the total number of silicon atoms, nitrogen atoms and oxygen atoms constituting the compound is 0.27 or more and 0.80 or less based on the number of the carbon atoms; the Hansen solubility parameter of the compound satisfies a relationship represented by the following formula (2); and the molecular weight of the compound is 200 or more and 15000 or less.

$$6 \leq \{4(\delta D_1 - \delta D_2)^2 + (\delta P_1 - \delta P_2)^2 + (\delta H_1 - \delta H_2)^2\}^{0.5} \quad (2)$$

EP 3 950 379 A1

# Description

## Technical Field

The present invention relates to a rubber composition and a method for producing the rubber composition.

## Background Art

In recent years, due to growing interest in environmental issues, there has been an increasing demand of fuel saving for motor vehicles, and a rubber composition used in tires for the motor vehicles is also required to have excellent fuel saving performance. As the rubber composition for the motor vehicle tires, a rubber composition containing a conjugated diene-based polymer and a filler such as silica is used.

On the other hand, the rubber composition containing the filler such as silica tends to be poor in processability. Therefore, it is proposed to improve the processability of the rubber composition for the tires by blending specific silica having fine particle size and specific monoalkanolamide to the rubber component (see Patent Literature 1, for example).

## Citation List

### Patent Literature

Patent Literature 1: JP 2013-245264 A

## Summary of Invention

### Technical Problem

A rubber composition for motor vehicle tires is required to be excellent in both of processability and fuel saving performance, but it is difficult to establish the both characteristics. Under such circumstances, an object of the present invention is to provide a rubber composition having excellent processability and good fuel saving performance, and a method for producing the rubber composition.

### Solution to Problem

A rubber composition according to one aspect of the present invention comprises a rubber component, an additive and a filler, wherein the additive comprises a compound including carbon atoms and at least one atomic species selected from the group consisting of silicon atoms, nitrogen atoms and oxygen atoms; a total number of silicon atoms, nitrogen atoms and oxygen atoms constituting the compound is 0.27 or more and 0.80 or less with respect to a number of the carbon atoms; a Hansen solubility parameter of the compound satisfies a relationship represented by the following formula (2):

$$6 \leq \{4(\delta D_1 - \delta D_2)^2 + (\delta P_1 - \delta P_2)^2 + (\delta H_1 - \delta H_2)^2\}^{0.5} \quad (2)$$

wherein $\delta D$ indicates a dispersion term, $\delta P$ indicates a polarity term, and $\delta H$ indicates a hydrogen bond term; and a molecular weight of the compound is 200 or more and 15000 or less.

Further, a rubber composition according to one aspect of the present invention comprises a rubber component, an additive and a filler, wherein the additive comprises a polymerized product of a monomer represented by the following formula (I).

[Chemical Formula 1]

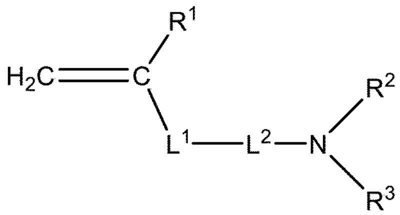

(I)

In the formula, $R^1$ indicates a hydrogen atom or a methyl group, $R^2$ and $R^3$ each independently indicate an alkyl group, $L^1$ indicates an amide bond or an ester bond, and $L^2$ indicates an alkanediyl group optionally having a substituent.

Further, a method for producing a rubber composition according to one aspect of the present invention comprises a step of mixing the above rubber component and the above additive.

**Advantageous Effects of Invention**

According to the present invention, it is possible to provide a rubber composition having excellent processability and good fuel saving performance, and a method for producing the rubber composition.

**Description of Embodiments**

The present embodiments will be described in detail. However, the present invention is not intended to be limited to the embodiments as follows.

[Rubber Composition]

A rubber composition of the present embodiments comprises a rubber component, an additive and a filler. Hereinafter, each component contained in the rubber composition will be described.

(Additive)

The rubber composition according to the first aspect of the present embodiments comprises, as an additive, a compound comprising carbon atoms and at least one atomic species selected from the group consisting of silicon atoms, nitrogen atoms and oxygen atoms. The total number of silicon atoms, nitrogen atoms and oxygen atoms constituting the compound is 0.27 or more and 0.80 or less with respect to the number of the carbon atoms; the Hansen solubility parameter of the compound satisfies a relationship represented by the following formula (2); and the molecular weight of the compound is 200 or more and 15000 or less. In the formula, $\delta D$ indicates a dispersion term, $\delta P$ indicates a polarity term, and $\delta H$ indicates a hydrogen bond term.

$$6 \leq \{4(\delta D_1 - \delta D_2)^2 + (\delta P_1 - \delta P_2)^2 + (\delta H_1 - \delta H_2)^2\}^{0.5} \quad (2)$$

The present inventors consider that by using a specific compound as the additive, together with the rubber component and the filler, the compound exists at a boundary between the filler and the rubber component in the rubber composition, and enhances its interaction, thereby being able to improve the fuel saving performance without reducing the processability of the rubber composition.

The total number of the silicon atoms, the nitrogen atoms and the oxygen atoms with respect to the number of the carbon atoms constituting the compound is defined as parameter A. The parameter A is defined as formula (1).

$$A = (Si + N + O)/C \quad (1)$$

In the formula (1), Si indicates the number of the silicon atoms, N indicates the number of the nitrogen atoms, O indicates the number of the oxygen atoms, and C indicates the number of the carbon atoms. For example, when Si is not contained in the compound, Si is zero. The compound according to the present embodiments may contain an atom except silicon, nitrogen, oxygen and carbon, but the number of that atom is not considered in the parameter A.

From the perspective that the compound contained in the rubber composition exists at the boundary between the filler and the rubber component and enhances the interaction, it is preferable that the compound consists of carbon atoms, hydrogen atoms, and at least one atomic species selected from the group consisting of silicon atoms, nitrogen

atoms and oxygen atoms; and more preferable that the compound consists of oxygen atoms, nitrogen atoms, carbon atoms and hydrogen atoms.

Si, N, O and C in the formula (1) can be calculated by measuring each content of the elements using X-ray photoelectron spectroscopy (XPS), elemental analysis using an elemental analyzer, a carbon/sulfur analyzer, an oxygen/nitrogen/hydrogen analyzer, a fluorescent X-ray analyzer or the like, or ion chromatography. Also, Si, N, O and C can be calculated from a structure of the compound. These methods may be used alone or plural combinedin a combination of two or more. Preferable are the method using the carbon/sulfur analyzer and the oxygen/nitrogen/hydrogen analyzer, the method for calculating them by measuring contents of the elements using ion chromatography, and the method for calculating them from the structure of the compound; and more preferably is the method for determining them from the structure of the compound.

To identify the structure of the compound, general methods can be used such as nuclear magnetic resonance spectroscopy (NMR), liquid chromatography, gas chromatography, ultraviolet-visible spectroscopy, and infrared spectroscopy.

The compound according to the present embodiments is a component to exist at the boundary between the filler and the rubber component and improve the fuel saving performance by enhancing the interaction between the filler and the rubber component. The parameter A reflects the compatibility of the compound with the rubber component and the strength of the interaction between the compound and the filler. The compound having a parameter A of 0.27 or more tends to exist in the vicinity of the filler because of increased affinity with the filler, thereby being able to enhance the interaction between the filler and the rubber component. The compound having a parameter A of less than 0.27 is unevenly distributed in the area of the rubber component, and also unevenly distributed in the area of the filler if it is excessively present, thereby becoming difficult to effectively enhance the interaction between the rubber component and the filler.

When the parameter A is 0.27 or more and 0.80 or less, the compound contained in the composition exists at the boundary between the filler and the rubber component, and enhances the interaction between them, thereby improving the fuel saving performance. The parameter A is preferably 0.27 or more and 0.70 or less, more preferably 0.27 or more and 0.60 or less, even more preferably 0.27 or more and 0.40 or less.

Parameter B calculated from the Hansen solubility parameter of the compound is defined as formula (2).

$$B=\{4(\delta D_1-\delta D_2)^2+(\delta P_1-\delta P_2)^2+(\delta H_1-\delta H_2)^2\}^{0.5} \quad (2)$$

For $\delta D_1$, $\delta P_1$ and $H_1$, a model compound represented by the following formula (H) is used for the calculation of the Hansen solubility parameter. For $\delta D_2$, $\delta P_2$ and $\delta H_2$, the compound contained in the rubber composition is used for the calculation of the Hansen solubility parameter.

[Chemical Formula 2]

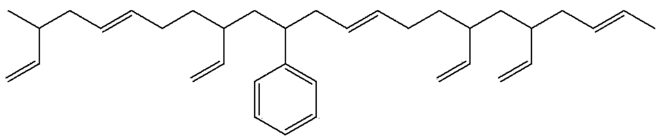

(H)

δD, δP and δH according to the present embodiments are calculated by using "Hansen Solubility Parameter in Practice (HSPiP)," which is developed by Charles Hansen, et al. and is a generally available commercial software.

The parameter B may be adjusted by utilizing the knowledge described in HANSEN SOLUBILITY PARAMETERS A User's Handbook (Charles M. Hansen, CRC Press), or adjusted as follows. For example, each component of the Hansen Solubility Parameters of the model compound is ($\delta D_1$, $\delta P_1$, $\delta H_1$) = (16.92, 0.27, 4.03). Each component of the Hansen Solubility Parameters of each atomic group alone, can be calculated by using HSPiP. When calculating the parameter B by substituting each component of the Hansen Solubility Parameter calculated by using each atomic group and the Hansen Solubility Parameter calculated by using the model compound, in the formula (2), in case of e.g., $CH_3$, the parameter B is 9.0. In case of $CH_2$, the parameter B is 3.5, and it is predicted that the parameter B obtained from the compound containing a lot of $CH_2$ will be smaller compared with the compound containing a lot of $CH_3$. In cases of CH, SH (S is Sulfur atom), and $CF_3$ (F is Fluorine atom), each of the parameter B is 9.5, 11.3 and 13.2, respectively, and it is slightly increased compared with the parameter B obtained from $CH_3$. In cases of OH, $NH_2$, NHCO and NCO, each of the parameter B is 36.6, 16.5, 16.3, 27.9 and 28.3, respectively, and it is increased compared with the parameter B obtained from $CH_3$. The parameter B can be adjusted to a preferable value by appropriately combining atomic groups

in view of these values and each component of the Hansen Solubility Parameter described in the Handbook described above.

The parameter B reflects the compatibility with the rubber component. When the parameter B is small, the compound is unevenly distributed in a periphery of the rubber component. When the parameter B is 6 or more, the compound can exist in the vicinity of the filler, to enhance the interaction with the rubber component, thereby improving the fuel saving performance. The parameter B is preferably 7 or more. When the parameter B is large, the compound is unevenly distributed in a periphery of the filler. From a point of view of enhancing the interaction between the rubber component and the filler without the compound unevenly distributed in the periphery of the filler, the parameter B is preferably 22 or less, more preferably 17 or less, even more preferably 12 or less.

The molecular weight of the compound can be calculated by using a method for calculating it from a structural formula of the compound, a method using a mass spectrometer, or a method of a gel permeation chromatography. As a method for calculating the molecular weight, preferable is the method for calculating it from the structural formula of the compound or the method using the mass spectrometer, more preferable is the method for calculating it from the structural formula of the compound.

When the molecular weight of the compound is high, the interaction between the filler and the rubber component is stabilized, thereby being able to improve the fuel saving performance, and therefore when using the compound having the molecular weight of 200 or more as the additive, a stabilizing effect can be easily obtained. The molecular weight of the compound is preferably 300 or more, more preferably 340 or more.

The molecular weight, the parameter A, and the parameter B, of the compound can be measured by using an extract from the rubber composition as a sample. As a method for extracting the compound, a general method can be used such as a Soxhlet extraction method and a dissolution reprecipitation method.

Since molecular mobility is increased when the molecular weight of the compound is low, the compound easily moves during mixing, and therefore the compound having a molecular weight of 15000 or less is high in mobility, thereby being able to easily move to the boundary between the filler and the rubber component during mixing. The molecular weight of the compound is preferably 10000 or less, more preferably 5000 or less, even more preferably 2000 or less.

When the compound has a structure based on at least one selected from the group consisting of an amino group, a siloxy group, an imino group, an ether bond, an ester bond, and an amide bond, the interaction between the filler and the rubber component can be enhanced. It is more preferable that the compound has a structure based on the amide bond or the amino group, even more preferable that the compound has a structure based on the amino group. It is particularly preferable that the amino group is a tertiary amino group. The compound according to the present embodiments may be used as a single compound or as a combination of two or more compounds.

The rubber composition according to the second aspect of the present embodiments comprises, as the additive, a polymerized product of a monomer represented by the following formula (I).

[Chemical Formula 3]

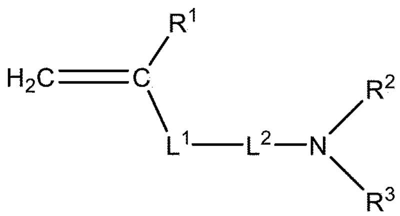

(I)

In the formula (I), $R^1$ indicates a hydrogen atom or a methyl group, $R^2$ and $R^3$ each independently indicates an alkyl group, $L^1$ indicates an amide bond or an ester bond, and $L^2$ indicates an alkanediyl group optionally having a substituent.

The present inventors consider that by using an oligomer obtained by polymerizing specific monomers as the additive, together with the rubber component and the filler, the oligomer in the rubber composition exists at the boundary between the filler and the rubber component, and enhances its interaction, thereby being able to improve the fuel saving performance without reducing the processability of the rubber composition.

From a point of view of more enhancing the interaction between the filler and the rubber component, it is preferable that the polymerized product according to the present embodiments is an oligomer in which a polymerization degree of the monomer represented by the formula (I) is 2 or more. The polymerization degree of the oligomer is more preferably 2 or more and 100 or less, even more preferably 2 or more and 20 or less, particularly preferably 2 or more and 10 or less.

Examples of the monomer represented by the formula (I) include acrylamide compounds such as N-(2-dimethylaminoethyl) acrylamide, N-(2-diethylaminoethyl) acrylamide, N-(3-dimethylaminopropyl) acrylamide, N-(3-diethylaminopropyl) acrylamide, N-(4-dimethylaminobutyl) acrylamide, N-(4-diethylaminobutyl) acrylamide, N-methyl-N-(2-dimethylaminoethyl) acrylamide, N-methyl-N-(2-diethylaminoethyl) acrylamide, N-methyl-N-(3-dimethylaminopropyl) acrylamide, N-methyl-N-(3-diethylaminopropyl) acrylamide, N-methyl-N-(4-dimethylaminobutyl) acrylamide, and N-methyl-N-(4-diethylaminobutyl) acrylamide; methacrylamide compounds such as N-(2-dimethylaminoethyl) methacrylamide, N-(2-diethylaminoethyl) methacrylamide, N-(3-dimethylaminopropyl) methacrylamide, N-(3-diethylaminopropyl) methacrylamide, N-(4-dimethylaminobutyl) methacrylamide, N-(4-diethylaminobutyl) methacrylamide, N-methyl-N-(2-dimethylaminoethyl) methacrylamide, N-methyl-N-(2-diethylaminoethyl) methacrylamide, N-methyl-N-(3-dimethylaminopropyl) methacrylamide, N-methyl-N-(3-diethylaminopropyl) methacrylamide, N-methyl-N-(4-dimethylaminobutyl) methacrylamide, and N-methyl-N-(4-diethylaminobutyl) methacrylamide; methacrylate compounds such as 2-diethylaminoethylacrylate, 3-dimethylaminopropylacrylate, 3-diethylaminopropylacrylate, 4-dimethylaminobuthylacrylate, and 4-diethylaminobuthylacrylate; and acrylate compounds such as 2-dimethylaminoethylmethacrylate, 2-diethylaminoethylmethacrylate, 3-dimethylaminopropylmethacrylate, 3-diethylaminopropylmethacrylate, 4-dimethylaminobutyalmethacrylate, 4-diethylaminobutylmethacrylate, and 2-dimethylaminoethylmethacrylate. These may be used alone or in combination of two or more.

From a point of view of achieving both the processability and the fuel saving performance, a content of the additive in the rubber composition may be 0.001 to 30 parts by mass, 0.01 to 15 parts by mass, or 0.1 to 5 parts by mass with respect to 100 parts by mass of the rubber component.

(Rubber Component)

The rubber component according to the present embodiments is not particularly limited. The rubber component may include diene-based rubber. The diene-based rubber means rubber of which a raw material is a diene monomer having a conjugated double bond. Examples of the diene-based rubber include natural rubber, polyisoprene rubber, chloroprene rubber, polybutadiene rubber, styrene-butadiene rubber, ethylene-propylene-diene rubber, and nitrile rubber. The rubber component may be used in combination of two or more rubbers.

The diene-based rubber may be modified diene-based rubber having a unit based on various modifiers at a molecular chain or an end. The modified diene-based rubber may be prepared by reacting a modifying agent when solution polymerizing a monomer containing a conjugated diene compound.

The modifying agent is not particularly limited, as long as it is a compound that can be used when preparing the modified diene-based rubber by solution polymerization. Use of the diene-based rubber modified with a compound having a hetero atom makes it easy to disperse the filler in the rubber composition. Examples of the hetero atom include an oxygen atom, a nitrogen atom, a sulfur atom and a silicon atom. Examples of the compound having the hetero atom include an amine compound, an acrylamide compound, a vinylsilane compound, an alkoxysilane compound, a polysiloxane compound, a silanesulfide compound, a sulfanylsilane compound, a cyanate compound, and a polyimine compound. The diene-based rubber may be modified by a secondary amine compound, an acrylamide compound having an amino group, or a vinylsilane compound having an amino group.

As the modifying agent according to the present embodiments, used may be compounds specifically disclosed in JP 2012-214711 A, JP 2008-239966 A, JP 2010-77413 A, JP 2014-189720 A, JP 2015-120785 A, JP 2017-106029 A, JP 2017-110230 A, WO2014/133096 A1, WO2014/014052 A1, WO2015/199226 A1, WO2016/133154 A1, U.S. Patent No. 9718911, U.S. Patent No. 9249276, etc.

When preparing the rubber component, between a start of polymerization of the monomer and an end of polymerization, a coupling agent may be added to polymer solution.

Examples of the coupling agent include silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, and diethoxydiethylsilane.

From a point of view of further improving the processability of the rubber composition and the fuel saving performance by optimizing the compatibility and the interaction between the rubber component and the filler, it is preferable that the rubber component contains the diene-based rubber, more preferable that the rubber component contains the modified diene-based rubber. From a point of view of accurately incorporating a modifying group into the polymer and further improving the fuel saving performance, it is preferable that the modified diene-based rubber is the diene-based rubber synthesized by the solution polymerization process, more preferable that it is modified styrene-butadiene rubber. From a point of view of further improving the compatibility with the additive, the rubber component may be the diene-based rubber modified by the monomer represented by the above formula (I).

(Filler)

Examples of the filler according to the present embodiments include silica, carbon black, calcium carbonate, talc, alumina, clay, aluminum hydroxide, and mica. These may be used alone or in combination of two or more.
Examples of the silica include dry silica (silicic anhydride), wet silica (silicic hydride), colloidal silica, precipitated silica, calcium silicate, and aluminum silicate. These may be used alone or in combination of two or more.
A BET specific surface area of the silica is normally 50 to 250 m2/g. The BET specific surface area can be measured in accordance with ASTM D1993-03. Examples of commercially available products of the silica include Product Name "Ultrasil VN3" produced by EVONIK INDUSTRIES A.G., Product Names "NIPSIL VN3," "NIPSIL AQ," "NIPSIL ER," "NIPSIL RS-150" produced by TOSOH SILICA CORPORATION, Product Names "Zeosil 1115MP," "Zeosil 1165MP" produced by Rhodia S.A., etc.
Examples of the carbon black include furnace black, acetylene black, thermal black, channel black, and graphite. Examples of the channel black include EPC, MPC and CC. Examples of the furnace carbon black include SAF, ISAF, HAF, MAF, FEF, SRF, GPF, APF, FF, CF, SCF, and ECF. Examples of the thermal black include FT and MT. The carbon black may be used as a single type or as a combination of two or more types.
A nitrogen adsorption specific surface area ($N_2SA$) of the carbon black is normally 5 to 200 $m^2/g$, and an amount of dibutyl phthalate (DBP) absorption of the carbon black is normally 5 to 300 mL/100 g. The nitrogen adsorption specific surface area can be measured in accordance with ASTM D4820-93, and the DBP absorption amount can be measured in accordance with ASTM D2414-93. Examples of commercially available products of the carbon black include Product Name "DIABLACK N339" produced by Mitsubishi Chemical Corporation, Product Names "SEAST 6," "SEAST 7HM" and "SEAST KH" produced by Tokai Carbon Co., Ltd., Product Names "CK 3" and "Special Black 4A" produced by EVONIK INDUSTRIES A.G., etc.
From a point of view of improving wear resistance and strength, a content of the filler in the rubber composition may be 10 to 150 parts by mass, 20 to 120 parts by mass, or 30 to 100 parts by mass with respect to 100 parts by mass of the rubber component.

(Other Component)

The rubber composition of the present embodiments may further contain components of a vulcanizing agent, a vulcanization accelerator, a vulcanization activator, an organic peroxide, a silane coupling agent, an extender oil, a processing aid, an antidegradant, a lubricant, etc.
As the vulcanizing agent, sulfur can be used. Examples of the sulfur include powdery sulfur, precipitated sulfur, colloidal sulfur, insoluble sulfur and high dispersion sulfur. A content of the sulfur is preferably 0.1 to 15 parts by mass with respect to 100 parts by mass of the rubber component, more preferably 0.3 to 10 parts by mass, even more preferably 0.5 to 5 parts by mass.
Examples of the vulcanization accelerator include thiazole vulcanization accelerators such as 2-mercaptobenzothiazole, dibenzothiazyl disulfide, and N-cyclohexyl-2-benzothiazyl sulfenamide; thiuram vulcanization accelerators such as tetramethylthiuram monosulfide, and tetramethylthiuram disulfide; sulfenamide vulcanization accelerators such as N-cyclohexyl-2-benzothiazolesulfenamide, N-tert-butyl-2-benzothiazolesulfenamide, N-oxymethylene-2-benzothiazolesulfenamide, N-oxyethylene-2-benzothiazolesulfenamide, and N,N'-diisopropyl-2-benzothiazolesulfenamide; guanidine vulcanization accelerators such as diphenyl guanidine, diorthotolyl guanidine, and orthotolyl biguanidine. A content of the vulcanization accelerator is preferably 0.1 to 5 parts by mass with respect to 100 parts by mass of the rubber component, more preferably 0.2 to 3 parts by mass.
Examples of the vulcanization activator include stearic acid, zinc oxide, etc. Examples of the organic peroxide include dicumyl peroxide, ditertiarybutyl peroxide, etc.
Examples of the silane coupling agent include vinyl trichlorosilane, vinyl triethoxysilane, vinyl-tris(β-methoxyethoxy) silane, β-(3,4-epoxycyclohexyl) ethyltorimethoxysilane, γ-glycidoxypropyltrimethoxysilane, γ-methacryloxypropyltrimethoxysilane, N-(β-aminoethyl)-γ-aminopropyltrimethoxysilane, N-(β-aminoethyl)-γ-aminopropylmethyldimethoxysilane, N-phenyl-γ-aminopropyltrimethoxysilane, γ-chloropropyltrimethoxysilane, γ-mercaptopropyltrimethoxysilane, γ-aminopropyltriethoxysilane, bis(3-(triethoxysilyl)propyl) disulfide, bis(3-(triethoxysilyl)propyl) tetrasulfide, γ-trimethoxysilylpropyldimetylthiocarbamoyltetrasulfide, γ-trimethoxysilylpropylbenzothiazyltetrasulfide, 3-octanoylthio-1-propyltriethoxysilane, and mercapto-thiocarboxylate oligomer.
A content of the silane coupling agent is preferably 1 to 20 parts by mass with respect to 100 parts by mass of a reinforcement material, more preferably 2 to 15 parts by mass, even more preferably 5 to 10 parts by mass.
Examples of the extender oil include an aromatic mineral oil (a viscosity specific gravity constant (V.G.C. value) of 0.900 to 1.049), a naphthenic mineral oil (V.G.C. value of 0.850 to 0.899), and a paraffinic mineral oil (V.G.C. value of 0.790 to 0.849). A content of a polycyclic aromatic in the extender oil is preferably less than 3% by mass, more preferably less than 1 % by mass. The content of the polycyclic aromatic is measured in accordance with Institute of

Petroleum 346/92 method. Further, a content of the aromatic compound (CA) in the extender oil is preferably 20% by mass or more.

[Method for Producing Rubber Composition]

A method for producing the rubber composition of the present embodiments comprises a step of mixing the rubber component and the additive. A method for mixing the rubber component and the additive is not particularly limited, and may be the following method (A) or method (B).

The method (A) is a method for mixing after preparing the rubber component and the additive separately. In the method (A), the additive separately prepared is mixed in a solution of the diene-based rubber produced by the solution polymerization process to obtain the composition containing the rubber component and the additive.

The method (B) is a method for obtaining in-situ a composition containing the rubber component and the additive. In the method (B), the composition containing the rubber component and the additive can be obtained by a step of obtaining a polymerized solution containing the diene-based rubber by the solution polymerization process, and by a step of preparing the additive by adding the monomer represented by the above formula (I) to a polymerization reactor containing the polymerized solution and by polymerizing the monomer.

The rubber composition of the present embodiments can be prepared by mixing the filler, and other components as needed, with the composition containing the rubber component and the additive. When preparing the rubber composition, a method for kneading the components by a known mixer such as a roll or Banbury mixer can be used.

As kneading conditions, in case of blending components except the vulcanizing agent and the vulcanization accelerator, a kneading temperature is normally 50 to 200°C, preferably 80 to 190°C; a kneading time is normally 30 seconds to 30 minutes, preferably 1 minute to 30 minutes. In case of blending the vulcanizing agent and the vulcanization accelerator, the kneading temperature is normally 100°C or less, preferably room temperature to 80°C. Further, a composition blending the vulcanizing agent and the vulcanization accelerator, is usually used after subjecting to a vulcanization treatment such as press vulcanization. A vulcanization temperature is normally 120 to 200°C, preferably 140 to 180°C.

Since the rubber composition of the present embodiments has excellent processability and shows good fuel saving performance, it is suitably used for a tire.

## Examples

Hereinafter, the present invention will be described in more detail with reference to examples, but it is not intended to be limited to the examples.

Physical property evaluations were conducted according to the following method.

1. Parameter A, Molecular weight and Polymerization degree

Parameter A, a molecular weight and a polymerization degree of the additive were calculated by using a chemical structural formula which was obtained from a structure of the additive determined by the NMR method.

2. Parameter B

For calculation of parameter B of the additive, software developed by Charles Hansen et al., i.e., Hansen Solubility Parameter in Practice (HSPiP) was used. For the calculation, the structure determined by the NMR method was used.

3. Mooney viscosity (ML1+4 or MS1+4)

In accordance with JIS K6300(1994), Mooney viscosity of the rubber composition was measured at 100°C. The smaller the numerical value of the Mooney viscosity, the better the processability.

4. tanδ (60°C) and tanδ (0°C)

From a vulcanized sheet, a strip-shaped test piece having a width of 1 mm and a length of 40 mm was punched out, and used for the test. The measurement was conducted by a viscoelasticity measuring apparatus (produced by Ueshima Seisakusho Co., Ltd.); and under the conditions of a strain of 1% and a frequency of 10 Hz, a loss tangent of the test piece at a temperature of 60°C (tanδ at 60°C) and a loss tangent of the test piece at a temperature of 0°C (tanδ at 0°C) were measured. The smaller the tanδ(60°C), the better the fuel saving performance; and the larger the tanδ(0°C),

the better the grip performance.

<Preparation of Additive Solution A>

Under a nitrogen atmosphere, a n-hexane solution containing 55.23 mmol of N-(3-dimethylaminopropyl) acrylamide, 184.1 mL of cyclohexane, and 55.23 mmol of n-butyllithium (n-BuLi) were charged into a reactor, and a temperature of the reactor was raised to 65°C while stirring, and at the same temperature a mixture was stirred for 15 minutes. Next, 3.36 mL of methanol was added in the reactor, and the temperature in the reactor was cooled to ordinary temperature, to obtain 173.1 g of the additive solution A containing an oligomer of N-(3-dimethylaminopropyl) acrylamide. It was confirmed from a result of $^1$H-NMR spectrum analysis that the compound represented by the following formula (A) was contained. The mean degree of polymerization of the oligomer of N-(3-dimethylaminopropyl) acrylamide was 2 and the mean molecular weight of the additive calculated from the degree of polymerization was 370.6.

[Chemical Formula 4]

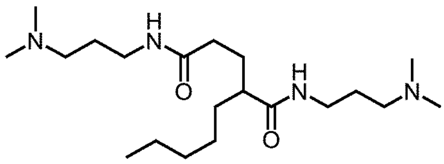

(A)

[Preparation of Rubber Composition and Vulcanized Sheet]

(Example 1)

After the polymerization reactor made of stainless steel with 30 L of internal volume was washed, dried, and purged with dry nitrogen, 15.3 kg of industrial hexane (density of 680 kg/m$^3$), 912 g of 1,3-butadiene, 288 g of styrene, 9.1 mL of tetrahydrofuran, and 6.54 mL of ethylene glycol diethyl ether were charged in the polymerization reactor. Next, after a small quantity of a hexane solution of n-BuLi as a scavenger was charged in the polymerization reactor, a n-hexane solution containing 18.41 mmol of piperidine and 18.14 mmol of n-BuLi was further charged, and the polymerization was initiated at 30°C.

Setting a stirring rate and a temperature of the inside of the polymerization reactor at 130 rpm and 65°C, respectively, 1,3-butadiene and styrene were continuously supplied to the polymerization reactor respectively for 2.5 hours at a rate of 547 g/hour and for 2 hours at a rate of 216 g/hour, and the polymerization was conducted for 3 hours in total. The total supply quantity of 1,3-butadiene was 1368 g and the total supply quantity of styrene was 432 g. 25 minutes after the start of the polymerization, 30 mL of a hexane solution containing 2.75 g of bis(diethylamino) methylvinylsilane was charged in the polymerization reactor.

Next, the polymerization reaction solution was stirred at a stirring rate of 130 rpm, and after 18.41 mmol of N-(3-dimethylaminopropyl) acrylamide was added at 65°C and stirred for 15 minutes, 30 mL of a hexane solution containing 1.12 mL of methanol was added to the polymerization reaction solution, and further stirred for 5 minutes.

Next, after adding 173.1 g of the above additive solution A to the polymerization reaction solution, 12.0 g of 2-tert-butyl-6-(3-tert-butyl-2-hydroxy-5-methylbengyl)-4-methylphenylacrylate (produced by Sumitomo Chemical Co., Ltd., Product Name: "Sumilizer GM") and 6.0 g of pentaerythrichiltetrakis(3-laurylthiopropionate) (produced by Sumitomo Chemical Co., Ltd., Product Name: "Sumilizer TP-D") were added as antioxidants, and the mixture was stirred for 10 minutes to obtain a polymer solution.

The polymer solution was left at ordinary temperature for 24 hours to evaporate the solvent, and further dried at 55°C for 12 hours under a reduced pressure, to obtain a composition al containing a copolymer of styrene and 1,3-butadiene (styrene-butadiene rubber) and an oligomer of N-(3-dimethylaminopropyl) acrylamide.

80 parts by mass of the composition al, 20 parts by mass of high cis BR (produced by Zeon Corporation, Product Name: "BR1220"), 80 parts by mass of silica (produced by EVONIK Industries A.G., Product Name: "ULTRASIL 7000 GR"), 6.4 parts by mass of a silane coupling agent (produced by EVONIK Industries A.G., Product Name: "Si 75"), 5 parts by mass of carbon black (produced by Mitsubishi Chemical Corporation, Product Name: "DIABLACK N339"), 30 parts by mass of an extender oil (produced by JXTG Nippon Oil & Energy Corporation, Product Name: "TDAE Aromax"), 2 parts by mass of an antidegradant (produced by Ouchi Shinko Chemical Industrial Co., Ltd., Product Name: "NOCRAC 6C"), 2 parts by mass of stearic acid, 3 parts by mass of zinc white, 2 parts by mass of a vulcanization accelerator (produced by Ouchi Shinko Chemical Industrial Co., Ltd., Product Name: "NOCCELER D"), 1.5 parts by mass of a vulcanization accelerator (produced by Ouchi Shinko Chemical Industrial Co., Ltd., Product Name: "NOCCELER CZ"),

and 1.5 parts by mass of sulfur were kneaded by Labo Plastomill, to prepare a rubber composition. The rubber composition was molded to a sheet by using a 6-inch roll, and the sheet is heated at 160°C for 55 minutes to be vulcanized, to prepare the vulcanized sheet.

(Example 2)

After the polymerization reactor made of stainless steel with 30 L of internal volume was washed, dried and purged with dry nitrogen, 15.3 kg of industrial hexane (density of 680 kg/$m^3$), 912 g of 1,3-butadiene, 288 g of styrene, 9.1 mL of tetrahydrofuran, and 6.54 mL of ethylene glycol diethyl ether were charged in the polymerization reactor. Next, after a small quantity of the hexane solution of n-BuLi as the scavenger was charged in the polymerization reactor, the n-hexane solution containing 18.41 mmol of piperidine and 18.14 mmol of n-BuLi was further charged, and the polymerization was initiated at 30°C.

Setting a stirring rate and a temperature of the inside of the polymerization reactor at 130 rpm and 65°C, respectively, 1,3-butadiene and styrene were continuously supplied to the polymerization reactor respectively for 2.5 hours at a rate of 547 g/hour and for 2 hours at a rate of 216 g/hour, and the polymerization was conducted for 3 hours in total. The total supply quantity of 1,3-butadiene was 1368 g and the total supply quantity of styrene was 432 g. 25 minutes after the start of the polymerization, 30 mL of the hexane solution containing 2.75 g of bis(diethylamino) methylvinylsilane was charged in the polymerization reactor.

Next, the polymerization reaction solution was stirred at a stirring rate of 130 rpm, and after 18.41 mmol of N-(3-dimethylaminopropyl) acrylamide was added at 65°C and stirred for 15 minutes, a n-hexane solution containing 55.23 mmol of n-BuLi was charged. At 10 seconds later from charging of the hexane solution containing n-BuLi, 55.23 mmol of N-(3-dimethylaminopropyl) acrylamide was added, and after stirring for 15 minutes, 30 mL of a hexane solution containing 4.47 mL of methanol was added at 65°C, and further stirred for 5 minutes.

Next, in the polymerization reaction solution, 12.0 g of "Sumilizer GM" and 6.0 g of "Sumilizer TP-D" were added, and stirred for 10 minutes, to obtain a polymer solution.

The polymer solution was left at ordinary temperature for 24 hours to evaporate the solvent, and further dried at 55°C for 12 hours under a reduced pressure, to obtain a composition a2 containing the styrene-butadiene rubber and the oligomer of N-(3-dimethylaminopropyl) acrylamide. As a result of $^1$H-NMR spectrum analysis of the composition a2, it was observed that the compound represented by the formula (A) was contained. The mean degree of polymerization of the oligomer of N-(3-dimethylaminopropyl) acrylamide was 3, and the mean molecular weight of the additive calculated from the degree of polymerization was 526.8.

Except that the composition a2 was used, in the same manner as Example 1, the rubber composition was prepared, to make the vulcanized sheet.

(Comparative Example 1)

Except that the above additive solution A was not added, in the same manner as Example 1, the rubber composition was prepared, to make the vulcanized sheet.

(Comparative Example 2)

Except that the additive solution B, in which 55.23 mmol of N-(3-dimethylaminopropyl) acrylamide and 184.1 mL of cyclohexane were mixed, was used in place of the additive solution A, in the same manner as Example 1, the rubber composition was prepared, to make the vulcanized sheet.

Evaluation results of the parameter A, the parameter B and the molecular weight of the additive, Mooney viscosity of the rubber composition, and tanδ of the vulcanized sheet are shown in Table 1. Here, Mooney viscosity and tanδ in Table 1 are relative values with Comparative Example 1 as 100.

[Table 1]

| | Example 1 | Example 2 | Comparative Example 1 | Comparative Example 2 |
|---|---|---|---|---|
| Parameter A | 0.30 | 0.32 | - | 0.38 |
| Parameter B | 11.2 | 12.9 | - | 9.9 |
| Molecular Weight of Additive | 370.6 | 526.8 | - | 156.2 |
| Mooney Viscosity | 96 | 100 | 100 | 97 |

(continued)

| | | Example 1 | Example 2 | Comparative Example 1 | Comparative Example 2 |
|---|---|---|---|---|---|
| tan δ | 0°C | 101 | 100 | 100 | 99 |
| | 60°C | 93 | 95 | 100 | 99 |

(Example 3)

After the polymerization reactor made of stainless steel with 30 L of internal volume was washed, dried and purged with dry nitrogen, 15.3 kg of industrial hexane (density of 680 $kg/m^3$), 968 g of 1,3-butadiene, 334 g of styrene, 12.0 mL of tetrahydrofuran, and 4.15 mL of ethylene glycol diethyl ether were charged in the polymerization reactor. Next, after a small quantity of the hexane solution of n-BuLi as the scavenger was charged in the polymerization reactor, a n-hexane solution containing 13.89 mmol of piperidine and 18.52 mmol of n-BuLi was further charged, and the polymerization was initiated at 30°C.

Setting a stirring rate and a temperature of the inside of the polymerization reactor at 130 rpm and 65°C, respectively, 1,3-butadiene and styrene were continuously supplied to the polymerization reactor respectively for 2.5 hours at a rate of 513 g/hour and for 2 hours at a rate of 208 g/hour, and the polymerization was conducted for 3 hours in total. The total supply quantity of 1,3-butadiene was 1282 g and the total supply quantity of styrene was 416 g. 25 minutes after the start of the polymerization, 30 mL of a hexane solution containing 12.5 g of bis(diethylamino) methylvinylsilane was charged in the polymerization reactor.

Next, the polymerization reaction solution was stirred at a stirring rate of 130 rpm, and 1.95 mmol of tin tetrachloride was added at 65°C and stirred for 15 minutes, then 10.72 mmol of N-(3-dimethylaminopropyl) acrylamide was added, and after stirred for 15 minutes, a n-hexane solution containing 31.35 mmol of n-BuLi was charged. At 15 minutes later from charging of the hexane solution of n-BuLi, 15.68 mmol of N-(3-dimethylaminopropyl) acrylamide was added, and after stirred for 15 minutes, 30 mL of a hexane solution containing 2.02 mL of methanol was added at 65°C, and further stirred for 5 minutes.

Next, to the polymerization reaction solution, 16.8 g of 4,6-bis(octylthiomethyl)-o-cresol (produced by BASF S.E., Product Name: "Irganox 1520L") was added as an antioxidant, and the mixture was stirred for 10 minutes to obtain a polymer solution.

The polymer solution was left at ordinary temperature for 24 hours to evaporate the solvent, and further dried at 55°C for 12 hours under a reduced pressure, to obtain a composition b1 containing the styrene-butadiene rubber and the oligomer of N-(3-dimethylaminopropyl) acrylamide.

Except that the composition b1 was used, in the same manner as Example 1, the rubber composition was prepared, to make the vulcanized sheet.

(Example 4)

After the polymerization reactor made of stainless steel with 20 L of internal volume was washed, dried and purged with dry nitrogen, 10.2 kg of industrial hexane (density of 680 $kg/m^3$), 504 g of 1,3-butadiene, 546 g of styrene, 6.07 mL of tetrahydrofuran, and 1.27 mL of ethylene glycol diethyl ether were charged in the polymerization reactor. Next, after a small quantity of the hexane solution of n-BuLi as the scavenger was charged in the polymerization reactor, a n-hexane solution containing 3.16 mmol of piperidine and 6.31 mmol of n-BuLi was further charged, and the polymerization was initiated at 30°C.

Setting a stirring rate and a temperature of the inside of the polymerization reactor at 130 rpm and 65°C, respectively, 1,3-butadiene and styrene were continuously supplied to the polymerization reactor respectively for 2 hours at a rate of 394 g/hour and for 2 hours at a rate of 101 g/hour, and further 1,3-butadiene was continuously supplied to the polymerization reactor for 20 minutes at a rate of 180 g/hour, and the polymerization was conducted for 170 minutes in total. The total supply quantity of 1,3-butadiene was 1352 g and the total supply quantity of styrene was 748 g. 20 minutes after the start of the polymerization, 30 mL of a hexane solution containing 0.182 g of bis(diethylamino) methylvinylsilane was charged in the polymerization reactor.

Next, the polymerization reaction solution was stirred at a stirring rate of 130 rpm, and 0.474 mmol of silicon tetrachloride was added at 65°C and stirred for 10 minutes, then 4.42 mmol of N-(3-dimethylaminopropyl) acrylamide was added, and after stirred for 10 minutes, a n-hexane solution containing 13.9 mmol of n-BuLi was charged. At 5 minutes later from charging of the hexane solution of n-BuLi, 13.9 mmol of N-(3-dimethylaminopropyl) acrylamide was added, and after stirred for 15 minutes, 20 mL of a hexane solution containing 1.23 mL of methanol was added at 65°C, and further stirred for 15 minutes.

Next, to the polymerization reaction solution, 8.40 g of "Irganox: 1520L" as an antioxidant and 788 g of an extender oil (produced by JXTG Nippon Oil & Energy Corporation, Product Name: "Process NC-140") were added, and the mixture was stirred for 10 minutes to obtain a polymer solution.

The polymer solution was left at ordinary temperature for 24 hours to evaporate the solvent, and further dried at 55°C for 12 hours under a reduced pressure, to obtain a composition b2 containing the styrene-butadiene rubber and the oligomer of N-(3-dimethylaminopropyl) acrylamide.

Except that the composition b2 was used, in the same manner as Example 1, the rubber composition was prepared, to make the vulcanized sheet.

(Comparative Example 3)

After the polymerization reactor made of stainless steel with 30 L of internal volume was washed, dried and purged with dry nitrogen, 15.3 kg of industrial hexane (density of 680 kg/$m^3$), 968 g of 1,3-butadiene, 334 g of styrene, 12.0 mL of tetrahydrofuran, and 4.15 mL of ethylene glycol diethyl ether were charged in the polymerization reactor. Next, after a small quantity of the hexane solution of n-BuLi as the scavenger was charged in the polymerization reactor, a n-hexane solution containing 13.89 mmol of piperidine and 18.52 mmol of n-BuLi was charged, and the polymerization was initiated at 30°C.

Setting a stirring rate and a temperature of the inside of the polymerization reactor at 130 rpm and 65°C, respectively, 1,3-butadiene and styrene were continuously supplied to the polymerization reactor respectively for 2.5 hours at a rate of 513 g/hour and for 2 hours at a rate of 208 g/hour, and the polymerization was conducted for 3 hours in total. The total supply quantity of 1,3-butadiene was 1282 g and the total supply quantity of styrene was 416 g. 25 minutes after the start of the polymerization, 30 mL of a hexane solution containing 12.5 g of bis(diethylamino) methylvinylsilane was charged in the polymerization reactor.

Next, the polymerization reaction solution was stirred at a stirring rate of 130 rpm, and 1.95 mmol of tin tetrachloride was added at 65°C and stirred for 15 minutes, then after 10.72 mmol of N-(3-dimethylaminopropyl) acrylamide was added and stirred for 15 minutes, 30 mL of a hexane solution containing 2.02 mL of methanol was charged at 65°C, and further stirred for 5 minutes.

In the polymerization reaction solution, 16.8 g of "Irganox 1520L" was added, and stirred for 10 minutes, to obtain a polymer solution. The polymer solution was left at ordinary temperature for 24 hours to evaporate the solvent, and further dried at 55°C for 12 hours under a reduced pressure, to obtain a composition b3 containing the styrene-butadiene rubber.

Except that the composition b3 was used, in the same manner as Example 1, the rubber composition was prepared, to make the vulcanized sheet.

(Comparative Example 4)

After the polymerization reactor made of stainless steel with 20 L of internal volume was washed, dried and purged with dry nitrogen, 10.2 kg of industrial hexane (density of 680 kg/$m^3$), 504 g of 1,3-butadiene, 546 g of styrene, 6.07 mL of tetrahydrofuran, and 1.27 mL of ethylene glycol diethyl ether were charged in the polymerization reactor. Next, after a small quantity of the hexane solution of n-BuLi was charged as the scavenger in the polymerization reactor, a n-hexane solution containing 3.16 mmol of piperidine and 6.31 mmol of n-BuLi was charged, and the polymerization was initiated at 30°C.

Setting a stirring rate and a temperature of the inside of the polymerization reactor at 130 rpm and 65°C, respectively, 1,3-butadiene and styrene were continuously supplied to the polymerization reactor respectively for 2 hours at a rate of 394 g/hour and for 2 hours at a rate of 101 g/hour, and further 1,3-butadiene was continuously supplied to the polymerization reactor for 20 minutes at a rate of 180 g/hour, and the polymerization was conducted for 170 minutes in total. The total supply quantity of 1,3-butadiene was 1352 g and the total supply quantity of styrene was 748 g. 20 minutes after the start of the polymerization, 30 mL of a hexane solution containing 0.182 g of bis(diethylamino) methylvinylsilane was charged in the polymerization reactor.

Next, the polymerization reaction solution was stirred at a stirring rate of 130 rpm, and 0.474 mmol of silicon tetrachloride was added at 65°C and stirred for 10 minutes, then after 4.42 mmol of N-(3-dimethylaminopropyl) acrylamide was added and stirred for 15 minutes, 20 mL of a hexane solution containing 1.23 mL of methanol was charged at 65°C, and further stirred for 15 minutes.

Next, in the polymerization reaction solution, 8.40 g of "Irganox 1520L" and 788 g of "Process NC-140" were added, and stirred for 10 minutes, to obtain a polymer solution. The polymer solution was left at ordinary temperature for 24 hours to evaporate the solvent, and further dried at 55°C for 12 hours under a reduced pressure, to obtain a composition b4 containing the styrene-butadiene rubber.

Except that the composition b4 was used, in the same manner as Example 1, the rubber composition was

prepared, to make the vulcanized sheet.

Evaluation results of the parameter A, the parameter B, and the molecular weight of the additive, Mooney viscosity of the rubber composition, and tanδ of the vulcanized sheet are shown in Table 2. Here, Mooney viscosity and tanδ in Table 2 are relative values with Comparative Example 4 as 100.

[Table 2]

| | | Example 3 | Example 4 | Comparative Example 3 | Comparative Example 4 |
|---|---|---|---|---|---|
| Parameter A | | 0.3 | 0.3 | - | - |
| Parameter B | | 11.2 | 11.2 | - | - |
| Molecular Weight of Additive | | 370.6 | 370.6 | - | - |
| Mooney Viscosity | | 96 | 98 | 100 | 100 |
| tan δ | 0°C | 101 | 102 | 101 | 100 |
| | 60°C | 95 | 97 | 100 | 100 |

<Preparation of Additive Solution C>

Under a nitrogen atmosphere, 55.23 mmol of 1-(3-dimethylaminopropyl)-3-ethylcarbodiimide, and 184.1 mL of tetrahydrofuran were charged in a reactor, and cooled to -78°C with stirring. Next, a n-hexane solution containing 27.62 mmol of n-BuLi was charged in the reactor, and a temperature in the reactor was raised to 25°C with stirring, and at the same temperature the mixture was stirred for 1 hour. Next, 1.12 mL of methanol was added in the reactor, and the temperature of the reactor was cooled to ordinary temperature, to obtain 179.1 g of the additive solution C containing an oligomer of 1-(3-dimethylaminopropyl)-3-ethylcarbodiimide. From a result of $^1$H-NMR spectrum analysis, it was observed that the compound represented by the following formula (C) was contained. The mean degree of polymerization of the oligomer of 1-(3-dimethylaminopropyl)-3-ethylcarbodiimide was 2, and the mean molecular weight calculated from the mean degree of polymerization was 368.6.

[Chemical Formula 5]

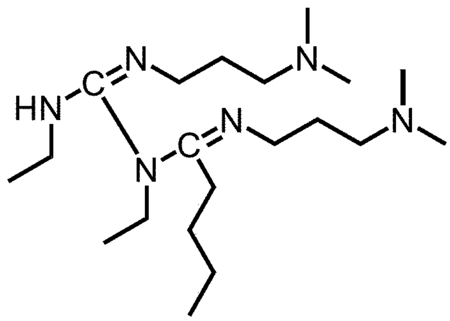

(C)

(Example 5)

Except that a polymerization reaction solution was prepared without piperidine and that 179.1 g of the additive solution C, in place of the additive solution A, was added in the polymerization reaction solution, a composition c1 was obtained in the same manner as Example 1. Except that the composition c1 was used, in the same manner as Example 1, the rubber composition was prepared, to make the vulcanized sheet.

<Preparation of Additive Solution D>

Except that (3-isocyanatopropyl) trimethoxysilane was used in place of 1-(3-dimethylaminopropyl)-3-ethylcarbodiimide, an additive solution D containing an oligomer of (3-isocyanatopropyl) trimethoxysilane was prepared in the same manner as the preparation of the additive solution C. From a result of $^1$H-NMR spectrum analysis, it was confirmed

that the compound represented by the following formula (D) was contained. The mean degree of polymerization of the oligomer of (3-isocyanatopropyl) trimethoxysilane was 2, and the mean molecular weight calculated from the mean degree of polymerization was 468.7.

[Chemical Formula 6]

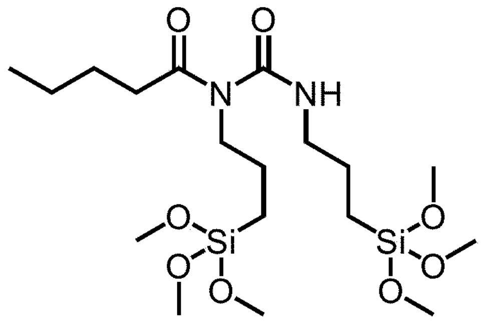

(D)

(Example 6)

Except that a polymerization reaction solution is prepared without piperidine and that 182.1 g of the additive solution D, in place of the additive solution A, was added in the polymerization reaction solution, a composition c2 was obtained in the same manner as Example 1. Except that the composition c2 was used, in the same manner as Example 1, the rubber composition was prepared, to make the vulcanized sheet.

(Comparative Example 5)

Except that a polymerization reaction solution was prepared without piperidine and that the additive solution A was not added in the polymerization reaction solution, a composition c3 was obtained in the same manner as Example 1. Except that the composition c3 was used, in the same manner as Example 1, the rubber composition was prepared, to make the vulcanized sheet.

Evaluation results of the parameter A, the parameter B, and the molecular weight of the additive, Mooney viscosity of the rubber composition, and tanδ of the vulcanized sheet are shown in Table 3. Here, Mooney viscosity and tanδ in Table 3 are relative values with Comparative Example 5 as 100.

[Table 3]

| | | Example 5 | Example 6 | Comparative Example 5 |
|---|---|---|---|---|
| Parameter A | | 0.3 | 0.67 | - |
| Parameter B | | 6.1 | 12.1 | - |
| Molecular Weight of Additive | | 368.6 | 468.7 | - |
| Mooney Viscosity | | 99 | 100 | 100 |
| tan δ | 0°C | 101 | 100 | 100 |
| | 60°C | 93 | 97 | 100 |

**Claims**

**1.** A rubber composition comprising a rubber component, an additive, and a filler,

wherein the additive comprises a compound including carbon atoms and at least one atomic species selected from the group consisting of silicon atoms, nitrogen atoms and oxygen atoms;
a total number of silicon atoms, nitrogen atoms and oxygen atoms constituting the compound is 0.27 or more

and 0.80 or less with respect to a number of the carbon atoms;
a Hansen solubility parameter of the compound satisfies a relationship represented by the following formula (2):

$$6 \leq \{4(\delta D_1 - \delta D_2)^2 + (\delta P_1 - \delta P_2)^2 + (\delta H_1 - \delta H_2)^2\}^{0.5} \quad (2)$$

wherein δD indicates a dispersion term, δP indicates a polarity term, and δH indicates a hydrogen bond term; and a molecular weight of the compound is 200 or more and 15000 or less.

**2.** The rubber composition according to claim 1, wherein the compound has a structure based on at least one selected from the group consisting of an amino group, a siloxy group, an imino group, an ether bond, an ester bond and an amide bond.

**3.** The rubber composition according to claim 1 or 2, wherein the compound has a tertiary amino group.

**4.** The rubber composition according to any one of claims 1 to 3, wherein the rubber component comprises a diene-based rubber.

**5.** The rubber composition according to claim 4, wherein the diene-based rubber is a modified diene-based rubber.

**6.** A rubber composition comprising a rubber component, an additive, and a filler, wherein the additive comprises a polymerized product of a monomer represented by the following formula (I):

[Chemical Formula 1]

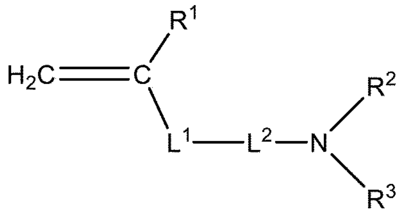

(I)

wherein $R^1$ indicates a hydrogen atom or a methyl group, $R^2$ and $R^3$ each independently indicate an alkyl group, $L^1$ indicates an amide bond or an ester bond, and $L^2$ indicates an alkanediyl group optionally having a substituent.

**7.** The rubber composition according to claim 6, wherein the rubber component comprises a diene-based rubber.

**8.** The rubber composition according to claim 7, wherein the diene-based rubber is a modified diene-based rubber.

**9.** A method for producing a rubber composition according to any one of claims 1 to 8, comprising a step of mixing the rubber component and the additive.

**10.** A method for producing a rubber composition according to any one of claims 6 to 8, the method comprising:

a step of obtaining a polymerized solution containing the diene-based rubber by a solution polymerization process in a polymerization reactor; and
a step of preparing the additive by adding the monomer represented by the above formula (I) to the polymerization reactor containing the polymerized solution and polymerizing the monomer.

## INTERNATIONAL SEARCH REPORT

International application No.
PCT/JP2020/014324

A. CLASSIFICATION OF SUBJECT MATTER
B60C 1/00(2006.01)i; C08L 9/00(2006.01)i; C08L 15/00(2006.01)i; C08L 21/00(2006.01)i; C08L 101/02(2006.01)i
FI: C08L21/00; C08L9/00; C08L101/02; C08L15/00; B60C1/00 Z
According to International Patent Classification (IPC) or to both national classification and IPC

B. FIELDS SEARCHED
Minimum documentation searched (classification system followed by classification symbols)
B60C1/00; C08L9/00; C08L15/00; C08L21/00; C08L101/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2012-21149 A (THE YOKOHAMA RUBBER CO., LTD.) 02.02.2012 (2012-02-02) claims, paragraphs [0009], [0022], [0025], [0057], examples | 1-9<br>10 |
| A | JP 2007-277411 A (TOYO TIRE AND RUBBER CO., LTD.) 25.10.2007 (2007-10-25) claims, examples | 1-10 |
| A | JP 2018-184497 A (SUMITOMO RUBBER INDUSTRIES, LTD.) 22.11.2018 (2018-11-22) claims, examples | 1-10 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 June 2020 (08.06.2020) | 23 June 2020 (23.06.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/014324

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

**INTERNATIONAL SEARCH REPORT**
Information on patent family members

International application No.
PCT/JP2020/014324

| Patent Documents referred in the Report | Publication Date | Patent Family | Publication Date |
|---|---|---|---|
| JP 2012-21149 A | 02 Feb. 2012 | (Family: none) | |
| JP 2007-277411 A | 25 Oct. 2007 | (Family: none) | |
| JP 2018-184497 A | 22 Nov. 2018 | US 2018/0305504 A1<br>claims, examples<br>EP 3395587 A1<br>CN 108752651 A | |

Form PCT/ISA/210 (patent family annex) (January 2015)

**INTERNATIONAL SEARCH REPORT**

International application No.
PCT/JP2020/014324

<Continuation of Box No. III>

Claims are classified into the two inventions below.

(Invention 1) Claims 1-5 and parts referring to claims 1-5 in claim 9

Claims 1-5 and the parts referring to claims 1-5 in claim 9 have the special technical feature of a "rubber composition including an additive having a predetermined molecular weight, in which the number of constitutional silicon atoms, nitrogen atoms, and oxygen atoms satisfies a predetermined relational expression, and the Hansen solubility parameter satisfies the relationship represented by a predetermined expression (2)," and thus are classified as invention 1.

(Invention 2) Claims 6-8 and 10, and parts referring to claims 6-8 in claim 9

It cannot be said that claims 6-8 and 10, and the parts referring to claims 6-8 in claim 9 have a special technical feature identical or corresponding to that of claim 1 classified as invention 1.

Furthermore, claims 6-8 and 10, and the parts referring to claims 6-8 in claim 9 are not dependent on claim 1 and are not substantially identical or equivalent to any of the claims classified as invention 1.

Therefore, claims 6-8 and 10 and the parts referring to claims 6-8 in claim 9 cannot be classified as invention 1.

In addition, claims 6-8 and 10 and the parts referring to claims 6-8 in claim 9 have the special technical feature of a "rubber composition including an additive containing a polymerized product of monomers represented by a predetermined formula (I)," and thus are classified as invention 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013245264 A
- JP 2012214711 A
- JP 2008239966 A
- JP 2010077413 A
- JP 2014189720 A
- JP 2015120785 A
- JP 2017106029 A
- JP 2017110230 A
- WO 2014133096 A1
- WO 2014014052 A1
- WO 2015199226 A1
- WO 2016133154 A1
- US 9718911 B
- US 9249276 B

### Non-patent literature cited in the description

- **CHARLES HANSEN.** *Hansen Solubility Parameter in Practice (HSPiP)*
- **CHARLES M. HANSEN.** HANSEN SOLUBILITY PARAMETERS A User's Handbook. CRC Press